# EUROPÄISCHE PATENTANMELDUNG

(11) **EP 0 715 994 A2**
(43) Veröffentlichungstag der Anmeldung: **12.06.1996**
(21) Anmeldenummer: 95119008.1
(22) Anmeldetag: 02.12.1995
(51) Int. Cl.: B60R 21/26

(54) **Hybrid-Gasgenerator für Sicherheitssysteme in Kraftfahrzeugen**

(30) Priorität: 08.12.1994 DE 4443681
(71) Anmelder: TEMIC Bayern-Chemie Airbag GmbH, D-84544 Aschau (DE)
(72) Erfinder: Bender, Richard, Dr., D-91207 Lauf (DE); Dölling, Uwe, D-84431 Heldenstein (DE); Herget, Christian, D-82380 Peissenberg (DE); Seidel, Harald, D-91233 Neunkirchen (DE); Vetter, Bernhard, D-83052 Bruckmühl (DE)
(74) Vertreter: Maute, Hans-Jürgen, Dipl.-Ing.

(57) **Zusammenfassung**

Es wird ein Hybrid-Gasgenerator für Sicherheitssysteme in Kraftfahrzeugen, insbesondere Airbag- und Gurtstraffersysteme oder pyrotechnische Trennschalter zur Trennung des Bordnetzes von der Kraftfahrzeugbatterie bei einem Auffahrunfall beschrieben, wo ein bewegbarer Hohlkolben zum Zerstören der den Druckgasbehälter verschließenden Berstmembran vorgesehen ist. Dieser Hohlkolben wird durch Zündung eines Treibsatzes aus einer mittels Abschermitteln fixierten ersten Position in Richtung auf die Berstmembran zubewegt, so daß nach Durchstoßen der Berstmembran die Bewegung des Hohlkolbens aufgrund von Hubbegrenzungsmitteln beendet wird. Nach dem Durchstoßen dieser Berstmembran wird eine weitere den Hohlkolben auf der dem Treibsatz zugewandten Seite verschließenden Berstmembran zerstört, so daß nunmehr auch die von dem Treibsatz erzeugten heißen Treibgase in den Hohlzylinder strömen können. In diesem als Mischkammer dienenden Hohlzylinder vermischen sich nun sowohl das aus dem Druckgasbehälter austretende Druckgas als auch das von dem Treibsatz erzeugte Treibgas und strömen über in der Kolbenwand des Hohlkolbens vorgesehenen Gasauslaßöffnungen in eine Filterkammer. Bei diesem erfindungsgemäßen Hybrid-Gasgenerator strömt zunächst kaltes Druckgas beispielsweise in einen als Airbag dienenden Gassack, bevor heißes Treibgas nachströmen kann. Der Gassack ist somit einer geringeren thermischen Belastung ausgesetzt.

## Beschreibung

Die Erfindung betrifft einen Hybrid-Gasgenerator für Sicherheitssysteme in Kraftfahrzeugen gemäß dem Oberbegriff des Patentanspruches 1.

Ein solcher Hybrid-Gasgenerator ist aus der PCT-Anmeldung WO 93/11 973 bekannt, bei dem ein Hohlzylinder aufgrund eines von einem Treibsatz erzeugten Strömungsmitteldruckes aus einer ersten Position in eine zweite Position unter Zerstörung der den Druckgasbehälter verschließenden Membran bewegt wird. Bei steigendem Brennkammerdruck wird eine die dem Treibsatz zugewandte Öffnung des Hohlzylinders verschließende Berstmembran zerstört, so daß nunmehr durch den Hohlzylinder hindurch die heißen Treibgase in den Druckgasbehälter strömen und dort das Druckgas erwärmen. Nach dem Zerstören der den Druckgasbehälter verschließenden Berstmembran strömt zunächst kaltes Druckgas aus dem Druckgasbehälter außerhalb des Hohlzylinders in einen Raum zwischen der Treibgasauslaßhülse und dem Druckgasbehälter, wobei zu einem späteren Zeitpunkt erwärmtes Druckgas nachströmt, um damit einen erhöhten Aufblasdruck für den Luftsack sicherzustellen.

Bei diesem bekannten Hybrid-Gasgenerator muß sichergestellt werden, daß durch das Eindringen des Hohlkolbens in die den Druckgasbehälter verschließende Berstmembran diese vollständig zerstört wird, da ansonsten vorab kein kaltes Druckgas ausströmen kann. Diese Berstmembran hat daher Eigenschaften aufzuweisen, die an sich widersprechend sind. So soll einerseits die Berstmembran beim Durchstoßen mittels des Hohlzylinders vollständig zerstört werden, muß jedoch andererseits den Druckgasbehälter so abdichten, daß eine Langzeitstabilität bzgl. des Druckes sichergestellt wird. Ist diese Berstmembran zu bruchfest, bleibt sie nach dem Durchstoßen durch den Hohlzylinder außerhalb desselben bestehen, mit der Folge, daß zunächst ungenügend Druckgas ausströmen kann. Ist dagegen die Berstmembran leicht zerstörbar ausgebildet, kann möglicherweise nicht die Langzeitstabilität sichergestellt werden.

Aus der DE 42 31 556 A1 ist ein weiterer Hybrid-Gasgenerator bekannt, bei dem ebenfalls ein Hohlzylinder aus einer ersten Position aufgrund der Zündung eines Treibsatzes in eine zweite Position bewegt wird, wobei gleichzeitig eine einen Druckgasbehälter verschließende Berstmembran zerstört wird und durch den Hohlkolben hindurchtretende heiße Treibgase einen in dem Druckgasbehälter angeordneten pyrotechnischen Gasgenerator aktivieren. Auch bei diesem bekannten Hybrid-Gasgenerator soll zunächst kaltes Druckgas durch die vollständig zerstörte Berstmembran an dem Hohlzylinder sowie an der den Hohlzylinder aufnehmenden Treibgasauslaßhülse vorbeigeleitet werden, bevor aufgrund der verspäteten Zündung des pyrotechnischen Gasgenerators das Druckgas aufgrund der heißen Treibgase in dem Druckgasbehälter erwärmt wird und über den gleichen Weg ausströmt. Auch bei diesem Hybrid-Gasgenerator muß sichergestellt werden, daß die den Druckgasbehälter verschließende Berstmembran durch den Hohlzylinder vollständig zerstört wird.

Dieses Problem wird bei einem anderen bekannten Hybrid-Gasgenerator gemäß der EP 0 512 747 A1 dadurch gelöst, daß die Spitze eines massiven bewegbaren Kolbens zwecks Zerstörung einer einen Druckgasbehälter verschließenden Membran in besonderer Weise ausgestaltet ist. Dieser bekannte Hybrid-Gasgenerator enthält ebenfalls einen pyrotechnischen Gasgenerator, der bei absinkendem Druck in dem Druckgasbehälter aufgrund der Zerstörung der Berstmembran ausgelöst wird. Der wesentlichste Nachteil dieses bekannten Hybrid-Gasgenerators besteht darin, daß der Druckgasbehälter zusätzlich einen pyrotechnischen Gasgenerator enthält, wobei ein bewegbarer Kolben sowohl die den Druckgasbehälter verschließende Berstmembran öffnen muß als auch zeitverzögert diesen pyrotechnischen Gasgenerator auslösen muß.

Die Aufgabe der Erfindung besteht darin, einen Hybrid-Gasgenerator der eingangs genannten Art anzugeben, bei dem der Funktionsablauf exakt einstellbar ist, insbesondere der Zeitpunkt bestimmbar ist, bei dem dem ausströmenden Druckgas aus dem Druckgasbehälter heißes von dem Treibsatz erzeugtes Treibgas zugemischt wird.

Diese Aufgabe wird durch die kennzeichnenden Merkmale des Patentanspruches 1 gelöst. Hiernach ist der bewegbare Hohlkolben als Mischkammer mit Gasauslaßöffnungen in dessen Kolbenwand für das Druckgas als auch für das heiße Treibgas ausgebildet, so daß nach dem Durchstoßen der den Druckgasbehälter verschließenden Membran zunächst das kalte Druckgas in diese Mischkammer einströmt und zeitverzögert - nach der Zerstörung der den Hohlkolben verschließenden Berstmembran - auch heißes Treibgas in die Mischkammer nachströmt. Damit kann die den Druckgasbehälter verschließende Membran zur Erreichung einer hohen Langzeitstabilität bzgl. des Druckes mit hoher Festigkeit ausgebildet werden, da aufgrund der Erfindung nicht mehr die gesamte Membran zerstört werden muß, um ein ungestörtes Ausströmen des Druckgases aus dem Druckgasbehälter sicherzustellen. Ferner führt diese erfindungsgemäße Lösung zu einem einfach aufzubauenden und damit auch kostengünstig herzustellenden Hybrid-Gasgenerator.

Bei einer vorteilhaften Weiterbildung der Erfindung ist die Mischkammer des Hohlkolbens mit einer Düse ausgebildet, die auf der dem Treibsatz zugewandten Seite des Hohlkolbens angeordnet ist. In vorteilhafter Weise wird hierdurch die Durchflußmenge des heißen Treibgases eingestellt, wodurch das Einströmverhalten des vermischten Gases in die Filterkammer beeinflußt wird.

Weitere vorteilhafte Ausführungsformen der Erfindung sind den abhängigen Patentansprüchen zu entnehmen.

Im folgenden soll die Erfindung anhand von Ausführungsbeispielen im Zusammenhang mit den Zeichnungen dargestellt und erläutert werden. Es zeigen:
- Figur 1: eine Schnittdarstellung eines ersten Ausführungsbeispieles der Erfindung, bei dem der Hohlkolben in der ersten Position fixiert ist,
- Figur 2: eine Außenansicht des Ausführungsbeispieles nach Figur 1,
- Figur 3: eine Detaildarstellung des Hohlkolbens gemäß Figur 1 in der zweiten Position,
- Figur 4: eine Detaildarstellung des Hohlkolbens eines zweiten Ausführungsbeispieles,
- Figur 5: eine Detaildarstellung des Hohlkolbens gemäß Figur 1 mit Abscherbolzen zu dessen Fixierung in seiner ersten Position und
- Figur 6: eine Detaildarstellung mit einem Hohlkolben gemäß Figur 1, der mit einer angeschweißten separaten Scheibe in seiner ersten Position fixiert ist.

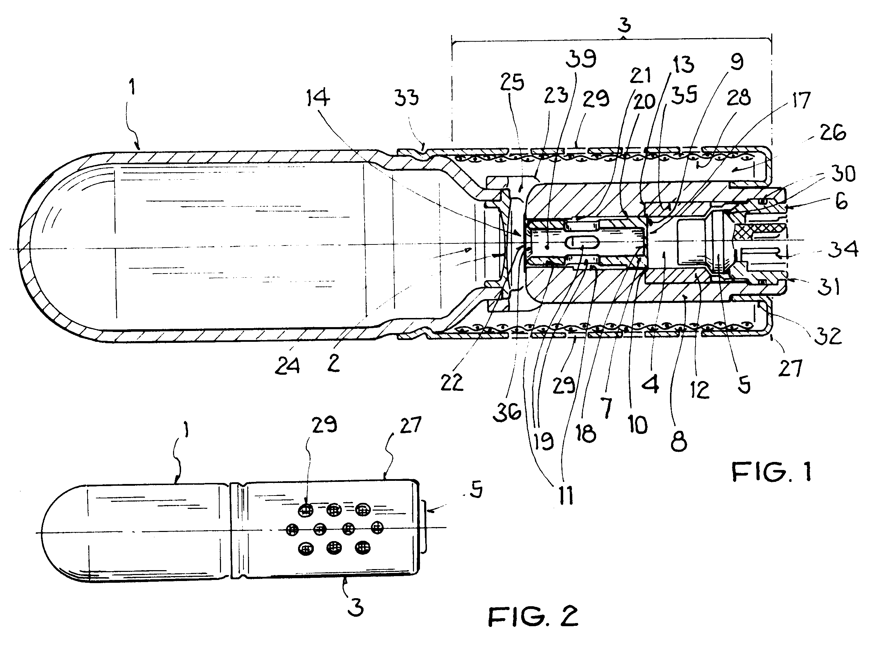

Der Hybrid-Gasgenerator nach Figur 1 besteht aus einem ersten Behälter, dem Druckgasbehälter 1 und einem zweiten Behälter, dem Treibgasbehälter 3. Dieser Treibgasbehälter 3 ist aus einer Treibgasauslaßhülse 8 mit einem diese Treibgasauslaßhülse 8 umschließenden Filterrohr 27 aufgebaut, wobei der Zwischenraum zwischen diesem Filterrohr 27 und der Treibgasauslaßhülse 8 eine Filterkammer 26 bildet. Eine Auslaßöffnung 24 des Druckgasbehälters 1 ist über einen Abstandshalter 23 mit der Treibgasauslaßhülse 8 verbunden, wobei diese Auslaßöffnung 24 von einer Berstmembran 2 verschlossen ist. Um das Druckgas als auch das von einem Treibsatz 5 erzeugte Treibgas in die Filterkammer 26 austreten zu lassen, weist dieser Abstandshalter 23 Gasauslaßöffnungen 25 auf.

In der zentralen Bohrung 11 und 35 der Treibgasauslaßhülse 8 ist ausgehend von der der Berstmembran 2 zugewandten Seite der Treibgasauslaßhülse 8 ein Hohlkolben 7, eine Stabilisierungshülse 12 und die den Treibsatz darstellende Anzündeinheit 5 koaxial zueinander angeordnet.

Der Hohlkolben 7 stellt eine bewegliche Mischkammer dar, die auf der der Anzündeinheit 5 zugewandten Seite 17 mit einer Berstmembran 18 verschlossen und der gegenüberliegende Rand 14 dieser Mischkammer mit einer Ringschneide 36 versehen ist.

Gemäß Figur 1 ist der Hohlzylinder 7 mittels eines ringförmigen Flansches 9 in einer ersten Position fixiert, wobei dieser Flansch 9 im der Anzündeinheit 5 zugewandten Randbereich der Mantelfläche des Hohlkolbens 7 angeformt ist und mit der Berstmembran 18 eine ebene Stirnfläche bildet. Unter Ausbildung einer Schulter 10 weitet sich die den Hohlkolben 7 aufnehmende Führungsbohrung 11 auf eine Bohrung 35 auf, deren Durchmesser sowohl dem äußeren Durchmesser des Flansches 9 als auch dem äußeren Durchmesser der Stabilisierungshülse 12 entspricht. Die Dicke des Mantels dieser Stabilisierungshülse 12 ist so gewählt, daß der flanschförmige Ansatz 9 des Hohlkolbens 7 zwischen die Schulter 10 und den Hülsenrand 13 der Stabilisierungshülse 12 eingeklemmt wird. Der innere Durchmesser dieser Stabilisierungshülse 12 entspricht ca. dem Durchmesser des Hohlkolbens 7. Der von der Innenfläche der Stabilisierungshülse 12 und den Stirnflächen der Berstmembran 18 als auch der Anzündeinheit 5 gebildete Raumbereich stellt eine Brennkammer 4 dar.

Die Anzündeinheit 5 wird mittels eines Halteringes 6 in der Zentralbohrung 35 mittels eines umlaufenden Wulstes derart fixiert, daß auf der innenliegenden Seite des Wulstes eine Stufe auf der Innenfläche der Bohrung 35 vorgesehen ist und die äußere Seite des Wulstes mittels eines stegförmigen Fortsatzes 31 der Treibgasauslaßhülse 8 umbördelt ist. Zur Zündung der Anzündeinheit 5 wird über Anschlußstecker 34 eine elektrische Spannung zugeführt. Zur Abdichtung der Brennkammer 4 ist sowohl zwischen der Anzündeinheit 5 und dem Haltering 6 als auch im Bereich des Wulstes im Umfangsbereich des Halteringes 6 jeweils ein Dichtring 30 vorgesehen. Die Anzündeinheit 5 entspricht einem elektrischen Anzünder, wie sie für bekannte, pyrotechnische Gasgeneratoren eingesetzt werden.

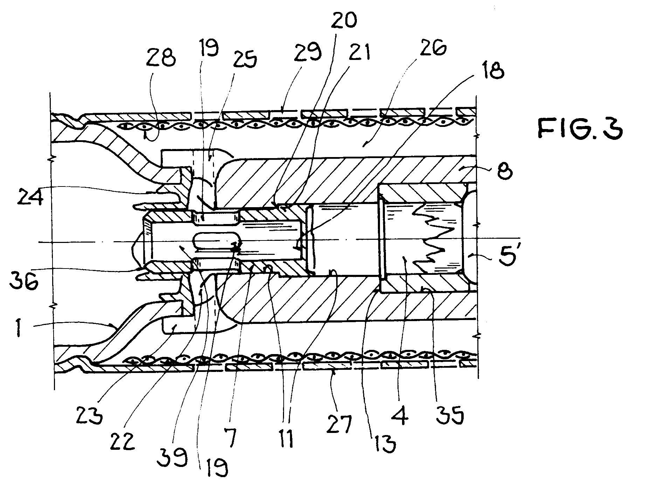

Der Hohlkolben 7 wird aufgrund der von der Anzündeinheit 5 erzeugten Treibgase aus einer ersten Position, wie es die Figur 1 zeigt, in eine zweite Position gemäß Figur 3 bewegt. Zur Erreichung dieser Hubbegrenzung des Hohlkolbens 7 ist dessen Mantelfläche stufenförmig abgesetzt, so daß ausgehend von dem flanschförmigen Ansatz 9 bis zu einer Stufe 20 der Durchmesser des Hohlkolbens 7 dem Durchmesser der Führungsbohrung 11 entspricht, und der daran anschließende Bereich unter Ausbildung der Stufe 20 einen kleineren Durchmesser aufweist. Entsprechend ist auch die Innenfläche der Führungsbohrung 11 stufenförmig ausgebildet, indem der der Berstmembran 2 benachbarte Randbereich unter Ausbildung einer Stufe 21 auf einen Durchmesser verkleinert ist, der dem verkleinerten Durchmesser des Hohlkolbens 7 entspricht. Bei der Bewegung des Hohlkolbens 7 in Richtung der Berstmembran 2 bildet daher diese Stufe 21 auf der Innenfläche der Führungsbohrung 11 einen Anschlag für die Stufe 20 auf der Außenfläche des Hohlkolbens 7. Dabei sind diese Stufen 20 und 21 so angeordnet, daß nach dem Wirksamwerden des Anschlages 21 sowohl die Berstmembran 2 von dem Hohlkolben 7 durchstoßen ist als auch in der Wand des Hohlkolbens 7 angeordnete Öffnungen 19 im Bereich von Gasauslaßöffnungen 25 des Abstandshalters 23 liegen.

Bei Zündung der Anzündeinheit 5 baut sich aufgrund der erzeugten Treibgase in der Brennkammer 4 ein Druck auf, der bei einem bestimmten Wert zur Abscherung des flanschförmigen Ansatzes 9 an dem Hohlkolben 7 führt und diesen in Richtung der Auslaßöffnung 24 des Druckgasbehälters 1 treibt. Bei dieser Bewegung des Hohlkolbens 7 wird zunächst eine die Führungsbohrung 11 der Treibgasauslaßhülse 8 verschließende Folie 22 durchstoßen und anschließend auch die die Auslaßöffnung 24 des Druckgasbehälters 1 verschließende Berstmembran 2 durchschlagen. Die Anzündeinheit 5 ist derart ausgelegt, daß nach Abscherung des Ansatzes 9 trotz Vergrößerung des Brennraumes 4 aufgrund der Bewegung des Hohlkolbens 7 der Brennkammerdruck weiterhin ansteigt, so daß in der zweiten Position des Hohlkolbens 7 gemäß Figur 3 auch die den Hohlkolben verschließende Berstmembran 18 zerstört wird. Die durch den flanschförmigen Ansatz 9 gebildete Abscherfläche und die den Hohlkolben 7 verschließende Berstmembran 18 sind daher so ausgelegt, daß der für die Abscherung des Ansatzes 9 erforderliche Brennkammerdruck kleiner ist als der für die Zerstörung der Berstmembran 18 notwendige Brennkammerdruck.

Bevor der Hohlkolben 7 die zweite Position erreicht hat und bevor die den Hohlkolben verschließende Berstmembran 18 zerstört ist, wurde schon die den Druckgasbehälter 1 verschließende Berstmembran 2 durchstoßen, so daß das Druckgas aus dem Druckgasbehälter 1 in den als Mischkammer 39 ausgebildeten Hohlzylinder 7 ausströmen und durch dessen Gasauslaßöffnungen 19 über die Öffnungen 25 in dem Abstandshalter 23 in die mit Filterelementen 28 versehene Filterkammer 26 eintreten kann. Diese Filterelemente 28 sind vor den in dem Filterrohr 27 angeordneten Gasauslaßöffnungen 29 angebracht. Das kalte Druckgas verläßt nach Durchtritt durch die Filterelemente 28 über diese Gasauslaßöffnungen 29 das Filterrohr 27 und strömt in einen nicht dargestellten, das Filterrohr 27 eng umschließenden Gassack ein. Somit wird dieser Gassack zunächst durch das kalte aus dem Druckgasbehälter 1 strömende Druckgas leicht aufgeblasen, bevor zeitverzögert aufgrund der Zerstörung der den Hohlkolben 7 verschließenden Berstmembran 18 auch heißes Treibgas über die Mischkammer 39, wo eine Vermischung mit dem kalten Druckgas aus dem Druckgasbehälter 1 stattfindet, nachströmt. Das nun von den heißen Treibgasen erwärmte Druckgas führt zu einem erhöhten Strömungsdruck, mit der Folge einer kurzen Aufblasdauer des Gassackes. Da das Druckgas aus dem Druckgasbehälter 1 über die Mischkammer 39 in dem Hohlzylinder 7 austritt, ist es nicht erforderlich, daß diese Berstmembran 2 vollständig zerstört werden muß. Damit kann diese Berstmembran 2 mit einer solchen Festigkeit ausgebildet werden, daß die Langzeitstabilität bzgl. des Druckes in dem Druckgasbehälter 1 sichergestellt ist.

Ferner wird das Gassackmaterial thermisch weniger belastet, da das in den Gassack austretende Gas zunächst kühl ist. Damit kann für den Gassack ein weniger thermisch belastbares Material eingesetzt werden, das damit auch kostengünstiger ist.

Gemäß Figur 1 ist das Filterrohr 27 an seinem einen Ende mittels einer Umbördelung 33 mit dem Druckgasbehälter 1 verbunden und an seinem anderen Ende mit einem nach innen gerichteten Steg 32 versehen, der durch eine entsprechende Umkantung entstanden ist. Dieser Steg 32 bildet einen Ring, in den die Treibgasauslaßhülse 8 eingepreßt ist.

Die Gasauslaßöffnungen 29 in dem Filterrohr 27 sind auf diametral gegenüberliegenden Seiten des Filterrohres 27 angeordnet, wie dies im Zusammenhang mit Figur 2 zu erkennen ist.

Schließlich weist der in den Figuren 1 und 2 dargestellte und beschriebene Hybrid-Gasgenerator aufgrund der geringen Anzahl von erforderlichen Einzelteilen einen einfachen Aufbau auf und ist daher kostengünstig herzustellen.

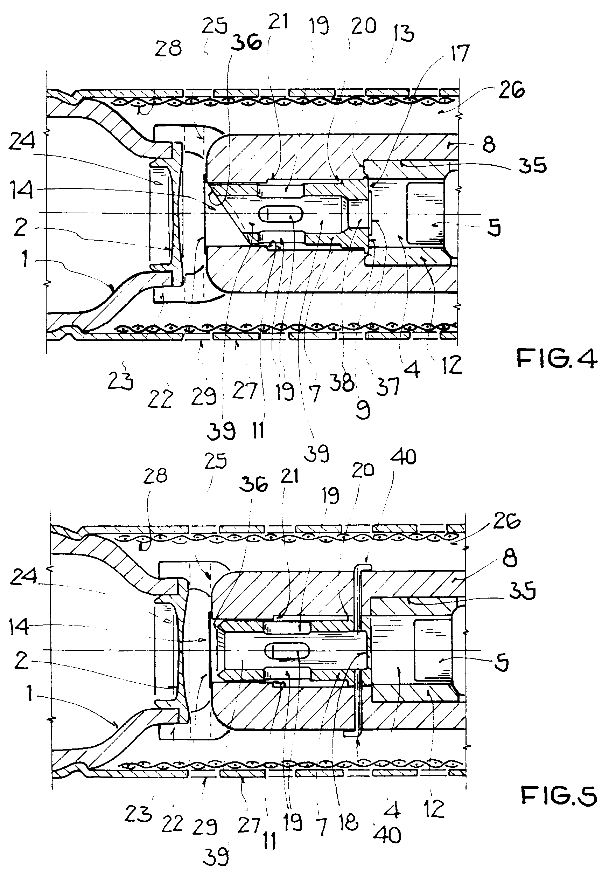

Das Ausführungsbeispiel nach Figur 4 unterscheidet sich von demjenigen nach Figur 1 bzw. 3 nur durch eine andere Ausgestaltung des als Mischkammer 39 dienenden Hohlkolbens 7. Bei diesem Hohlkolben 7 steht die der Berstmembran 2 benachbarte Randfläche 14 nicht senkrecht zur Längsrichtung des Hohlkolbens 7, sondern weist mit dieser einen Winkel von ca. 45° auf. Die damit gebildete Schneidspitze 36 führt beim Durchstoßen der Berstmembran 2 zu einem von der Spitze 36 ausgeübten hohen Anpreßdruck auf die Berstmembran 2, so daß ein leichteres Aufschneiden dieser Berstmembran 2 sichergestellt ist und im weiteren Verlauf des Durchstoßens der zu durchstoßende Bereich der Berstmembran 2 so umgeklappt wird, daß sich dieser nicht vor die aufgeschnittene Öffnung legen kann. Die auf die Spitze 36 zulaufenden Schneidkanten können auch konkav (siehe gestrichelte Linie) oder konvex ausgebildet werden.

Die zylinderförmige Mischkammer 39 ist auf der der Anzündeinheit 5 zugewandten Seite mit einer zylinderförmigen Düse 38 versehen, die einen kleineren Durchmesser als die übrige Mischkammer 39 aufweist. Die Düse 38 wird mit einer Verdämmung 37 verschlossen.

Der Vorteil dieser Düse 38 besteht darin, daß durch geeignete Auswahl der Verdämmung 37 und des Düsenquerschnittes der Düse 38 ein entscheidender Einfluß auf den zeitlichen Ablauf der Funktion genommen werden kann.

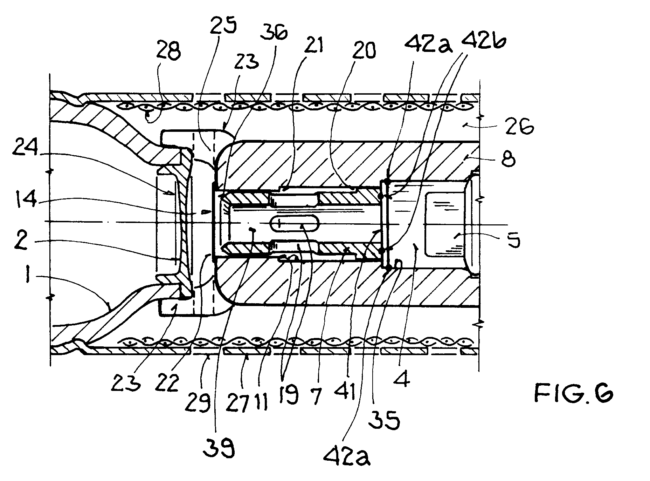

In den Ausführungsbeispielen gemäß den Figuren 1, 3 und 4 wird der als Mischkammer dienende Hohlkolben 7 mittels des flanschförmigen Ansatzes 9 in seiner ersten Position fixiert. Die Ausführungsbeispiele nach den Figuren 5 und 6 zeigen dagegen alternative Möglichkeiten zur Fixierung des Hohlkolbens 7 in seiner ersten Position. So sind nach Figur 5 Abscherbolzen 40 vorgesehen, die ausgehend von der Filterkammer 26 durch die Treibgasauslaßhülse 8 bis in die Zylinderwand des Hohlkolbens 7 geführt sind.

Bei der Ausführungsform nach Figur 6 ist anstatt des flanschförmigen Ansatzes eine separate Scheibe 41 vorgesehen, deren Durchmesser der die Brennkammer bildenden zentralen Öffnung 35 entspricht. Diese separate Scheibe 41 ist einmal über Schweißpunkte 42a mit der Treibgasauslaßhülse 8 und über Schweißpunkte 42b mit dem Hohlzylinder 7 verbunden. Somit dient diese separate Scheibe 41 gleichzeitig als Berstmembran, da diese die Mischkammer 39 verschließt. Zur Erreichung bestimmter Bersteigenschaften kann diese Scheibe 41 mit Sollbruchstellen versehen werden.

Der erfindungsgemäße Hybrid-Gasgenerator kann für passive Insassenschutzsysteme, wie Airbag- und Gurtstraffersysteme als auch Überrollbügelsysteme eingesetzt werden und ist auch für Trennsicherheitsschalter einsetzbar, die bei einem die Sicherheitssysteme auslösenden Unfall das Bordnetz von der Kraftfahrzeugbatterie trennen.

## Patentansprüche

1. Hybrid-Gasgenerator für Sicherheitssysteme in Kraftfahrzeugen, bestehend aus
a) einem ersten Behälter (1) zur Aufnahme eines Druckgases, der von einer Berstmembran (2) verschlossen ist,
b) einem zweiten Behälter (3) mit einer Brennkammer (4) und einem elektrisch zündbaren Treibsatz (5), wobei
c) der zweite Behälter (3) eine Treibgasauslaßhülse (8) umfaßt, die einen bewegbaren Hohlkolben (7) als Mittel zum Zerstören der Berstmembran (2) aufnimmt,
d) Abschermittel (9, 40, 41) zur Fixierung des Kolbens (7) in einer ersten Position vorgesehen sind, die nach Zündung des Treibsatzes (5) den Kolben (7) freigeben,
e) der Hohlkolben (7) auf der dem Treibsatz (5) zugewandten Seite von einer Berstmembran (18) verschlossen ist und
f) Hubbegrenzungsmittel (20, 21) für den Hohlkolben (7) vorgesehen sind, die die Bewegung dieses Hohlkolbens (7) aus seiner ersten Position in einer zweiten Position beenden, so daß bei Erreichen dieser zweiten Position der Hohlkolben (7) die Berstmembran (2) des ersten Behälters (1) durchstoßen hat und die Zerstörung der den Hohlkolben (7) verschließenden Berstmembran (18) nach dem Zerstören der den ersten Behälter (1) verschließenden Berstmembran (2) erfolgt,
gekennzeichnet durch folgendes Merkmal:
g) zwecks Ausbildung des Hohlkolbens (7) als Mischkammer (39) sind in dessen Kolbenwand Gasauslaßöffnungen (19) vorgesehen, durch die sowohl das Druckgas aus dem ersten Behälter (1) als auch das von dem Treibsatz (5) erzeugte Treibgas über die Mischkammer (39) ausströmen.

2. Hybrid-Gasgenerator nach Anspruch 1, dadurch gekennzeichnet, daß die Mischkammer (39) zur Bildung einer Düse (38) auf der dem Treibsatz (5) zugewandten Seite (17) eine Verengung aufweist.

3. Hybrid-Gasgenerator nach Anspruch 1 oder 2, dadurch gekennzeichnet, daß die der Berstmembran (2) des ersten Behälters (1) zugewandte Stirnfläche (14) zur Ausbildung einer Spitze (30) mit der Längsrichtung des Hohlzylinders (7) einen Winkel von weniger als 90° bildet.

4. Hybrid-Gasgenerator nach Anspruch 3, dadurch gekennzeichnet, daß die auf die Spitze (30) zulaufenden Stirnflächen konkav oder konvex ausgebildet sind.

5. Hybrid-Gasgenerator nach einem der vorangehenden Ansprüche, dadurch gekennzeichnet, daß als Abschermittel (9) der Hohlkolben (7) einen flanschförmigen Ansatz aufweist, der an einem auf der Innenfläche der Treibgasauslaßhülse (8) angeordneten Schalter (10) anliegt.

6. Hybrid-Gasgenerator nach Anspruch 5, dadurch gekennzeichnet, daß der flanschförmige Ansatz (9) im dem Treibsatz (5) zugewandten Randbereich der Mantelfläche des Hohlkolbens (7) angeordnet ist und daß ferner eine Stabilisierungshülse (12) vorgesehen ist, die zwischen dem Treibsatz (5) und dem Hohlkolben (7) angeordnet ist und den flanschförmigen Ansatz (9) des Hohlkolbens (7) mit deren Hülsenrand (13) abstützt.

7. Hybrid-Gasgenerator nach einem der vorangehenden Ansprüche, dadurch gekennzeichnet, daß die Öffnung der Treibgasauslaßhülse (8) auf der der Berstmembran (2) des ersten Behälters (1) zugewandten Seite mit einer Folie (22) verschlossen ist.

8. Hybrid-Gasgenerator nach einem der vorangehenden Ansprüche, dadurch gekennzeichnet, daß zwischen der Auslaßöffnung (24) des ersten Behälters (1) und der Treibgasauslaßhülse (8) ein ringförmiger, Gasauslaßöffnungen (25) aufweisender Abstandshalter (23) vorgesehen ist.

9. Hybrid-Gasgenerator nach einem der vorangehenden Ansprüche, dadurch gekennzeichnet, daß die Treibgasauslaßhülse (8) von einer ringförmigen Filterkammer (26) umschlossen ist, in die das Druckgas aus dem Druckgasbehälter (1) als auch das von dem Treibsatz (5) erzeugte Treibgas über die Gasauslaßöffnungen (19) des Hohlzylinders (7) einströmen.

10. Hybrid-Gasgenerator nach Anspruch 9, dadurch gekennzeichnet, daß die Filterkammer (26) mittels eines Filterrohres (27) mit Gasaustrittsöffnungen (29) gebildet wird.
